# EUROPEAN PATENT APPLICATION

(11) **EP 2 096 521 A1**
(43) Date of publication of application: **02.09.2009**
(21) Application number: 07850057.6
(22) Date of filing: 04.12.2007
(51) Int. Cl.: G06F 3/033, H01H 25/00, H01H 25/04, H01H 25/06

(54) **DIRECTION INPUT DEVICE**

(30) Priority: 11.12.2006 JP 2006333894
(71) Applicant: Sunarrow Limited, Tokyo 104-0032 (JP)
(72) Inventor: WASHIO, Yasushi, Mitsuke-shi Niigata 954-0076 (JP); IKEDA, Hideaki, Mitsuke-shi Niigata 954-0076 (JP); MARUYAMA, Shizuka, Sado-shi Niigata 952-0212 (JP)
(74) Representative: Prinz & Partner
(86) International application number: PCT/JP2007/073409
(87) International publication number: WO 2008/072506

(57) **Abstract**

The object of the invention is to provide a directional input device that changes the distance between electrodes that are included in a capacitative element in correspondence with a sliding direction (that is, input direction) to which an input unit is made to slide, thereby changing the electrostatic capacity of the capacitative element.

The directional input device according to the invention is a directional input device for detecting an input direction depending on a change in the capacity of a capacitative element. The directional input device is comprising: an input unit, that horizontally slide in correspondence with an input direction allowed to be inputted; a capacitative element, that has a movable electrode and a fixed electrode and is used to detect an input direction inputted to the input unit; and one or more movable portions, that move downward with the sliding of the input unit and make move downward the movable electrode corresponding to the input direction inputted to the input unit together with the downward movement of the movable portions and bring the movable electrode close to the fixed electrode that faces the movable electrode.

## Description

### BACKGROUND OF THE INVENTION

### Field of the Invention

The present invention relates to a directional input device that can be used for electronic apparatuses, such as portable telephones (including so-called PHSs), personal digital assistants (PDAs), portable audios, remote controllers for home appliances, game players, and keyboards.

### Description of the Related Art

Directional input devices include a slide-type directional input device for detecting a sliding direction of an input unit by using a change in the electrostatic capacity of a capacitative element.

As an apparatus using this slide-type directional input device, for example, Patent Document 1 discloses an electrostatic capacitive sensor (refer to Claim 1 of JP-A-6-314163) including substrates (1) and (2) that are disposed to face each other, and in which one is movable parallel to the other, an electrode portion (C) that is provided on a facing surface of the substrate (1), electrode portions (Cy+), (Cy-), (Cx+), and (Cx-) that are provided at angle intervals of 90° around a central portion of the facing surface of the substrate (2), and an input unit (J) that is provided in the central portion of one of the substrates (1) and (2).

The electrostatic capacitive sensor described in Patent Document 1 detects an input direction of the input unit depending on a change in the electrostatic capacity of a capacitative element caused by a change in the area of electrodes that constitute the capacitative element. The electrostatic capacity [C] of the capacitative element can be calculated by the following Expression 1: C = ε*S/d. Here, ε is a dielectric constant, S is the area of the electrodes, and d is the distance between the electrodes. Like Expression 1, the electrostatic capacity [C] is proportional to the area [S] of the electrodes, and is inversely proportional to the distance [d] between the electrodes. In a case where the distance between the electrodes is short, the variation of electrostatic capacity becomes large if the distance between the electrodes is changed rather than the area is chenged. For this reason, if a configuration, where the distance between the electrodes that constitute the capacitative element is changed, is adopted in a directional input device that requires miniaturization and thinning, the variation of electrostatic capacity increases more easily.

### SUMMARY OF THE INVENTION

The invention has been made in view of the above points, and therefore the object of the invention is to provide a directional input device that changes the distance between electrodes that are included in a capacitative element in correspondence with a sliding direction (that is, input direction) to which an input unit is made to slide, thereby changing the electrostatic capacity of the capacitative element.

In order to solve the problem, the directional input device according to the invention is a directional input device for detecting an input direction depending on a change in the capacity of a capacitative element. The directional input device comprising: an input unit, that horizontally slide in correspondence with an input direction allowed to be inputted; a capacitative element, that has a movable electrode and a fixed electrode and is used to detect an input direction inputted to the input unit; and one or more movable portions, that move downward with the sliding of the input unit and make move downward the movable electrode corresponding to the input direction inputted to the input unit together with the downward movement of the movable portions and bring the movable electrode close to the fixed electrode that faces the movable electrode.

By the movable portion, sliding of the input unit can be changed to downward movement of the movable electrode. Also, since the movable electrode can be brought close to the fixed electrode that faces the movable electrode, the electrostatic capacity of a capacitative element including the movable electrode and fixed electrode can be changed. That is, this directional input device can change the distance between electrodes that are included in a capacitative element in correspondence with a sliding direction (that is, input direction) to which the input unit is made to slide, thereby changing the electrostatic capacity of the capacitative element.

Further, in the directional input device according to the invention, the input unit is provided so as to be tiltable while sliding in correspondence with the input direction; and the movable portion is provided so as to move downward as the input unit tilts while sliding and make move downward the movable electrode corresponding to the input direction inputted to the input unit together with the downward movement of the movable portion and bring the movable electrode close to the fixed electrode that faces the movable electrode.

By the movable portion, sliding and tilting of the input unit can be changed to downward movement of the movable electrode. Also, since the movable electrode can be brought close to the fixed electrode, the electrostatic capacity of a capacitative element including the movable electrode and fixed electrode can be changed. That is, this directional input device can change the distance between electrodes that are included in a capacitative element in correspondence with a sliding direction (that is, input direction) to which the input unit is made to slide and tilt, thereby changing the electrostatic capacity of the capacitative element. Moreover, since the input unit is provided so as to be tiltable and slidable, the input unit can be tilted while being slid, and this directional input device can give an operator of the directional input device a new operation feeling.

Further, in the directional input device according to the invention, the movable portion, that has a slope which becomes gradually high along a course where the input unit slides and is placed in the course where the input unit slides, is provided so as to move downward with the pressure on the slope by the input unit that slides horizontally; and the movable electrode corresponding to the input direction inputted to the input unit is provided on a bottom surface of the movable portion.

If the input unit slides horizontally, the input unit will moves on the slope. However, since the input unit moves horizontally, the input unit will press this slope. Also, since the movable portion will move downward if the slope is pressed by the input unit, the movable electrode provided on the bottom surface of the movable portion can be brought close to the fixed electrode. Thereby, since the sliding of the input unit can be changed to the downward movement of the movable electrode, and the movable electrode can be brought close to the fixed electrode, the electrostatic capacity of a capacitative element including the movable electrode and fixed electrode can be changed. That is, this directional input device can change the distance between electrodes that are included in a capacitative element in correspondence with a sliding direction (that is, input direction) to which the input unit is made to slide, thereby changing the electrostatic capacity of the capacitative element.

Further, in the directional input device according to the invention, the one or more movable portions include: one or more first movable portions, that have a slope which becomes gradually high along a course where the input unit slides, is provided in the course where the input unit slides and move downward with the pressure on the slope by the input unit that slides horizontally; and one or more second movable portions, that are provided below the first movable portions so as to surround the input unit, and at least some of that move downward while pressed by the first movable portions; and the movable electrode corresponding to the input direction inputted to the input unit, that is provided on a bottom surface of the second movable portion.

If the input unit slides horizontally, the input unit will moves on the slope. However, since the input unit moves horizontally, the input unit will press this slope. Also, since the movable portion will move downward if the slope is pressed by the input unit, the movable electrode provided on the bottom surface of the movable portion can be brought close to the fixed electrode. Thereby, since the sliding of the input unit can be changed to the downward movement of the movable electrode, and the movable electrode can be brought close to the fixed electrode, the electrostatic capacity of a capacitative element including the movable electrode and fixed electrode can be changed. That is, this directional input device can change the distance between electrodes that are included in a capacitative element in correspondence with a sliding direction (that is, input direction) to which the input unit is made to slide, thereby changing the electrostatic capacity of the capacitative element. Moreover, since the movable portion has a first movable portion and a second movable portion, and the second movable portion is provided below the first movable portion so as to surround the input unit, if the second movable portion is designed in advance, the first movable portion and the input unit can be suitably changed depending on designs, such as the number of input directions that can be input.

Further, in the directional input device according to the invention, the input unit is provided so as to be tiltable while sliding in correspondence with an input direction; and the movable portion is provided so as to be pressed by the input unit that is tilted while sliding and move downward.

This directional input device can change the distance between electrodes that are included in a capacitative element in correspondence with a direction (that is, input direction) to which the input unit is made to slide and tilt, thereby changing the electrostatic capacity of the capacitative element. Moreover, since the input unit is provided so as to be tiltable while sliding, the input unit can be tilted while being slid, and this directional input device can give an operator of the directional input device a new operation feeling.

Further, in the directional input device according to the invention, the movable portion is formed like a sheet, is bent so as to project downward, and is provided so as to move downward while being curved downward with the sliding of the input unit, and the movable electrode corresponding to the input direction inputted to the input unit is provided on a bottom surface of the movable portion.

By the movable portion, sliding of the input unit can be surely changed to downward movement of the movable electrode. Moreover, since the movable portion formed like a sheet, and is bent so as to project downward, a distance required for movement of a movable electrode for detecting electrostatic capacity is secured, and the movable electrode can be brought close to the fixed electrode in an initial state.

Further, in the directional input device according to the invention, the input unit includes at least a keytop and is formed so that the keytop may move downward when the keytop is pressed in a longitudinal direction, and moreover the device is comprising a pusher that moves downward with the downward movement of the keytop and presses a click feeling generating portion that generates a click feeling.

This allows the keytop of the input unit to be also used as ,for example, a determination key. A click feeling is obtained by pressing operation of the keytop.

Further, the directional input device according to the invention moreover comprising a bulging portion, an apex of that abuts on a central bottom surface of the input unit.

Since the input unit is formed so as to be tiltable, as the central bottom surface of the input unit abuts on the apex of the bulging portion, tilting of the input unit becomes smooth. Further, in a case where the input unit includes at least a keytop in its middle and is formed so that the keytop may move downward when the keytop is pressed in a longitudinal direction, and moreover the directional input device comprises a pusher that moves downward with the downward movement of the keytop and presses a click feeling generating portion that generates a click feeling, the apex of the bulging portion abuts on the bottom surface of the keytop. Thus, downward movement of the pusher can be lessened or eliminated by movement of the keytop by tilting of the input unit. Finally, it is possible to prevent an excessive force from being applied to a click feeling generating portion. Thereby, generation of a click feeling can be prevented during tilting of the input unit.

Further, in a multi-directional input device according to the invention, the input unit includes at least a keytop and is formed so that the keytop may move downward when the keytop is pressed in a longitudinal direction, and moreover the device is comprising a pusher that moves downward with the downward movement of the keytop and presses a click feeling generating portion that generates a click feeling.

This allows the keytop of the input unit to be also used as, for example, a determination key. A click feeling is obtained by pressing operation of the keytop.

In the invention, the expression "move downward" means that it is only necessary that at least a portion of a member moves downward, and is an expression including even a case where at least a portion of a member moves downward in parallel, a case where at least a portion of a member moves downward so as to rotate around a certain point, a case where at least a portion of a member moves obliquely downward, and a case where at least a portion of a member is curved and moves downward.

In the invention, the expression " the movable electrode corresponding to the input direction inputted to the input unit is provided on a bottom surface of the movable portion" means that it is only necessary that the movable electrodes is provided at least on a portion of the bottom surface of the movable portion. In the invention, the expression " the movable electrode corresponding to the input direction inputted to the input unit is provided on a bottom surface of the second movable portion" means that it is only necessary that the movable electrode is provided at least on a portion of the bottom surface of the movable portion.

In the invention, " the movable electrode corresponding to the input direction inputted to the input unit" may be plural. That is, the "movable electrode" that moves downward with downward movement of the movable portion may be plural. Moreover, in the invention, the expression "make move downward the movable electrode corresponding to the input direction inputted to the input unit --- and bring the movable electrode close to the fixed electrode that faces the movable electrode " is an expression including even moving a portion of the movable electrode downward to bring this portion close to the fixed electrode.

### [Effects of the Invention]

According to the directional input device relating to the invention, by changing the distance between electrodes that constitute a capacitative element in correspondence with a sliding direction (that is, input direction) to which the input unit is made to slide, the electrostatic capacity of the capacitative element is changed.

### BRIEF DESCRIPTION OF THE DRAWINGS

Fig. 1 is a perspective view of a directional input device 1 according to an example of a first embodiment;
Fig. 2 is a plan view of the directional input device 1 according to the example of the first embodiment;
Fig. 3 is a schematic exploded perspective view of the directional input device 1 according to the example of the first embodiment;
Fig. 4 is a perspective view of the back of a third member 7;
Fig. 5(a) is a sectional view taken along a line A-A in Fig. 2;
Fig. 5(b) is a sectional view taken along a line B-B in Fig. 2;
Figs. 6(a) to 6(c) are operational explanatory views illustrating a first operation of the directional input device 1: Fig. 6(a) shows an initial state, and if a right direction is inputted from the state of Fig. 6(a), the state will change from Fig. 6(a) to Fig. 6(b) and from Fig. 6(b) to Fig. 6(c);
Figs. 7(a) to 7(c) are operational explanatory views illustrating a second operation of the directional input device 1: Fig. 7(a) shows an initial state, and if a right direction is inputted from the state of Fig. 7(a), the state will change from Fig. 7(a) to Fig. 7(b) and from Fig. 7(b) to Fig. 7(c);
Figs. 8(a) and 8(b) are operational explanatory views illustrating a third operation of the directional input device 1: Fig. 8(a) shows an initial state, and if a keytop is pressed in a longitudinal direction from the state of Fig. 8(a), the state will change from Fig. 8(a) to Fig. 8(b);
Fig. 9 is a schematic exploded perspective view of an example of a directional input device 100 according to a second embodiment;
Fig. 10 is a sectional view of an example of the directional input device 100 according to the second embodiment;
Figs. 11(a) to 11(c) are operational explanatory views illustrating a first operation of the directional input device 100: Fig. 11(a) shows an initial state, and if an up direction (left direction in the drawing) is inputted from the state of Fig. 11(a), the state will change from Fig. 11(a) to Fig. 11(b) and from Fig. 11(b) to Fig. 11(c);
Figs. 12(a) and 12(b) are operational explanatory views illustrating a second operation of the directional input device 100: Fig. 12(a) shows an initial state, and if a keytop is pressed in a longitudinal direction from the state of Fig. 12(a), the state will change from Fig. 12(a) to Fig. 12(b); and
Fig. 13 shows a schematic configuration when the directional input device 200 is assembled into a portable telephone.

### DESCRIPTION OF THE PREFERRED EMBODIMENTS

Hereinafter, embodiments of the invention will be described with reference to the drawings. In addition, similar things, corresponding things, and things that can be named generically in the drawings will be described while they are denoted by the same reference numerals. In addition, if similar things, corresponding things, and things that can be named generically in the drawings are plural, only some of them may be denoted by reference numerals.

In the following embodiments, a directional input device used for a portable telephone will be described.

### (First Embodiment)

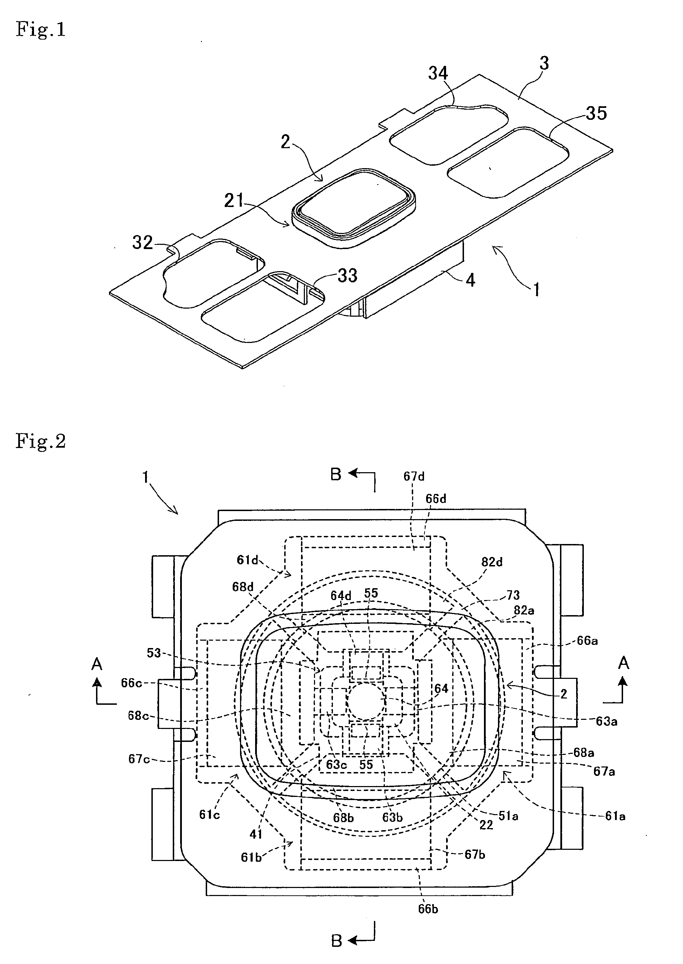

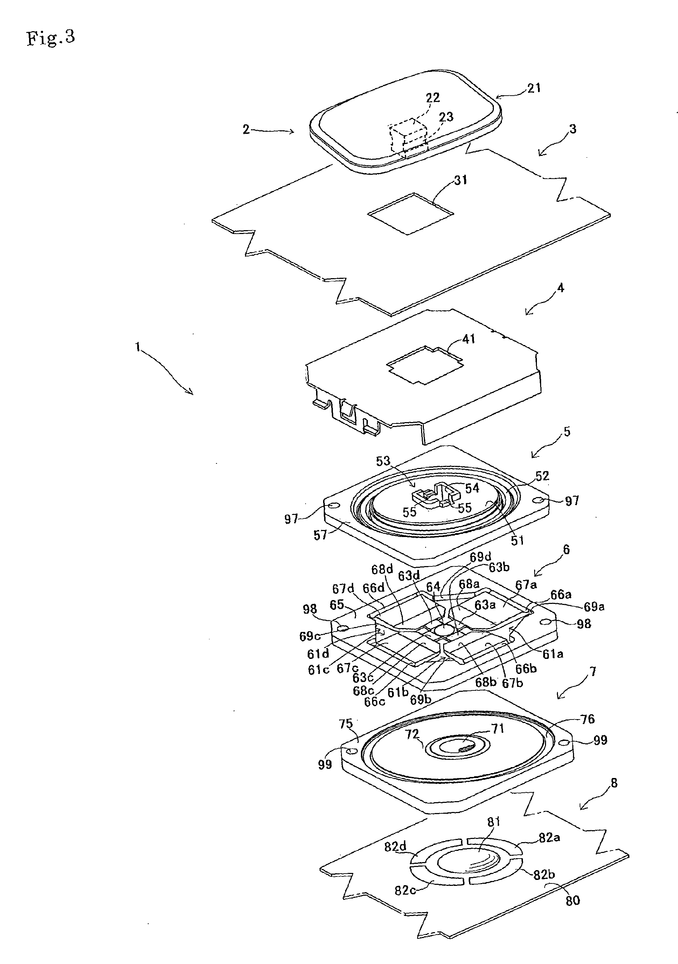

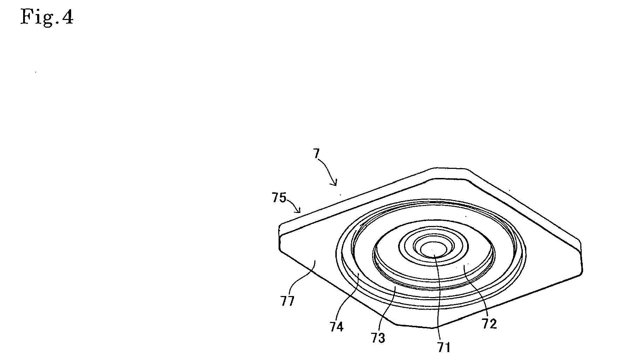

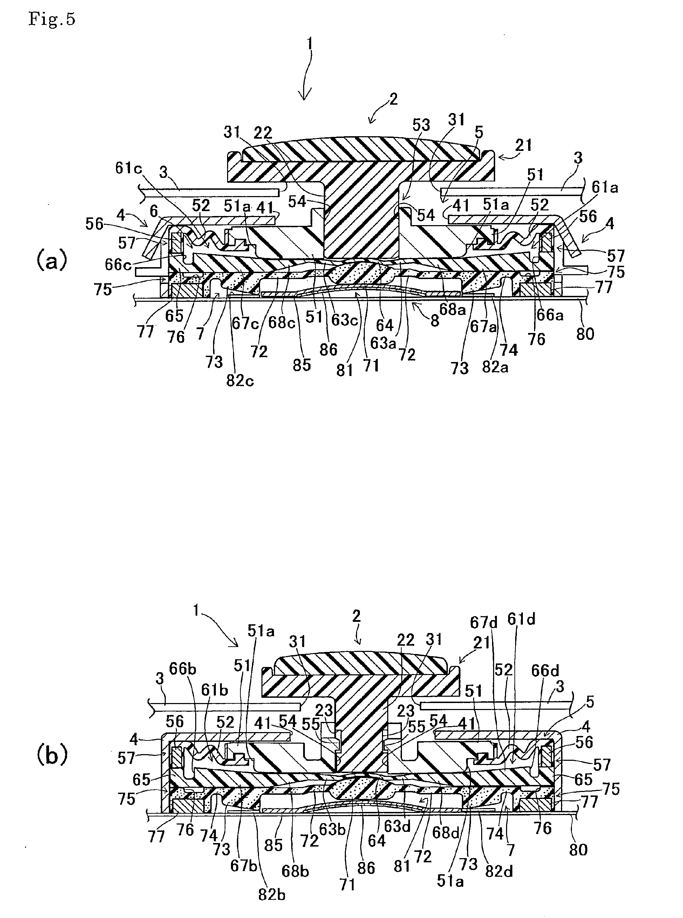

Fig. 1 is a perspective view of a directional input device 1 according to an example of a first embodiment. Fig. 2 is a plan view of the directional input device 1 according to the example of the first embodiment. Fig. 3 is a schematic exploded perspective view of the directional input device 1 according to the example of the first embodiment. Fig. 4 is a perspective view of the back of a third member 7. Fig. 5(a) is a sectional view taken along a line A-A in Fig. 2. Fig. 5(b) is a sectional view taken along a line B-B in Fig. 2.

In addition, a plate 3 is omitted in Fig. 2. Further, only principal portions of the plate 3 and a substrate 8 are drawn in Fig. 3. Further, only principal portions of the plate 3 and the substrate 8 are drawn in Figs. 5(a) and 5(b). Further, hatchings of cross-sections of a fixed electrode 82a to a fixed electrode 82d, the plate 3, and a base 80 are omitted in Figs. 5(a) and 5(b).

Further, some of internal components are drawn by dotted lines in Fig. 2. In addition, a dotted line 51a of Fig. 2 corresponds to a side surface 51a of a pressing member 51 (refer to Figs. 5(a) and 5(b)).

The device 1 includes a keytop 2, the plate 3, a cover member 4, a first member 5, a second member 6, a third member 7, and the substrate 8.

The third member 7 is disposed on the substrate 8. The second member 6 is disposed on the third member 7. The first member 5 is disposed on the second member 6. The cover member 4 is disposed so as to cover the first member 5 to the third member 7. Furthermore, the plate 3 is disposed over the cover member 4.

The keytop 2 is attached to the first member 5 with the plate 3 and the cover member 4 put therebetween. In a case where the plate 3 constitutes a portion of a housing of a portable telephone and is assembled into the portable telephone, as shown in Figs. 5(a) and 5(b), a gap is provided between the plate 3 and the cover member 4. Further, between the plate 3 and the keytop 2, a stroke required for downward movement and tilting of the keytop 2 is secured.

The first member 5 to the third member 7 are disposed on the substrate 8 by proper methods, such as putting the cover member 4 on the first member 5 to the third member 7 to fix the first member 5 to the third member 7 to the substrate 8, or passing pins through pinholes 97 to 99 provided in the first member 5 to the third member 7 to fix the first member 5 to the third member 7 to the substrate 8.

The keytop 2 is operated by an operator to allow a desired direction to be input to a portable telephone. The keytop 2 is constituted by an operating portion 21, and a supporting portion 22 that supports the operating portion 21, and transmits operation of the operating portion to an internal mechanism of the directional input device 1. Further, the keytop 2 includes a concave portion 23 in a given position of a side surface of the supporting portion 22. The shape of the keytop 2 can be adopted suitably.

The keytop 2 is formed of selectable synthetic resin including rigid resin, such as polycarbonate resin, polyurethane resin, or silicone resin. Further, the keytop 2 may be formed of other suitable materials, such as various kinds of glass or metal.

The plate 3 constitutes a portion of a housing of a portable telephone. The plate 3 is formed of selectable synthetic resin including rigid resin, such as polycarbonate resin, polyurethane resin, or silicone resin. The shape of the plate 3, etc. can be determined suitably. Further, the plate 3 may be formed of other suitable materials, such as a plate made of metal, such as SUS. Further, the plate 3 has a through hole 31 that is sized so as not to obstruct the operation of the keytop 2. In addition, the plate 3 includes through holes 32, 33, 34, and 35 (refer to Fig. 1), and keytops, such as function keys, are disposed in these through holes.

The cover member 4 houses the first member 5, the second member 6, and the third member 7. The cover member 4 is formed of selectable synthetic resin including rigid resin, such as polycarbonate resin, polyurethane resin, or silicone resin. Further, the cover member 4 may be formed of other suitable materials, such as a plate made of metal, such as SUS. The shape of the cover member 4, etc. can be determined suitably.

A substantially cross-shaped through hole 41 that allows the supporting portion 22 of the keytop 2 to pass therethrough, and limits movement of the keytop 2 in an input direction to four directions including up, down, right, and left directions is provided in a top surface of the cover member 4. That is, input directions that allowed to be input by the directional input device 1 become four directions.

In addition, the through hole 41 may have a shape that limits movement of the keytop 2 in an input direction to eight directions including up, down, right, and left directions, and intermediate directions therebetween (for example, upper right direction, etc.). Similarly, the through hole 41 may have a shape that limits movement of the keytop 2 in an input direction depending on how many input directions that allowed to be input, such as 16 directions and 32 directions, are required. Further, in a case where input directions that allowed to be input are all the directions of 360 degrees, the through hole is formed in a shape (for example, circular shape) that does not limit movement of the keytop 2 to four directions including up, down, right, and left directions.

Input directions that allowed to be input to the directional input device 1 may be plural (including all the directions), and can be suitably determined depending on the use of the device, and the shape of the through hole 41 is determined in correspondence to the input directions. Further, the through hole 41 has a shape that limits the moving distance of the keytop 2 if necessary.

In addition, the through hole 31 of the plate 3 may be the same as the through hole 41 of the cover member 4. In this case, the through hole 41 of the cover member 4 may be the same as the through hole 31. Moreover, at least any one of the plate 3 and the cover member 4 can be changed to other members if the operation of the directional input device 1, etc. can be realized. Moreover, at least any one of the plate 3 and the cover member 4 may not be provided if the operation of the directional input device 1, etc. can be realized.

The first member 5 includes a frame portion 57, a bent portion 52, and the pressing member 51. The pressing member 51 attaches the keytop 2, and presses a first movable portion 61 to be described by tilting or sliding in a horizontal direction.

An attaching portion 53 that attaches the keytop 2 so as to be movable in a vertical direction is provided in the center of the pressing member 51. The attaching portion 53 includes a through hole 54 and a convex portion 55.

A portion of the supporting portion 22 of the keytop is fitted into the through hole 54. The shape of the through hole 54 is made to conform substantially to the shape of the supporting portion 22 of the keytop. By making the shape of the through hole 54 conform to the cross-sectional shape of the supporting portion 22 of the keytop, the pressing member 51 also slides and/or tilts along with sliding and/or tilting operation of the keytop 2.

The convex portion 55 enters a lower portion of the concave portion 23. Thereby, the pressing member 51 and the keytop 2 engage each other, and the keytop 2 becomes movable downward independently from the pressing member 51. Thereby, when the keytop 2 is pressed in a longitudinal direction, the keytop of the input unit will move downward.

The pressing member 51 is formed of selectable synthetic resin including rigid resin, such as polycarbonate resin, polyurethane resin, or silicone resin. Further, the pressing member 51 may be formed of other suitable materials, such as various kinds of glass or metal. The pressing member 51 is formed of a material having a degree of hardness required to press an inclined portion 67 to be described.

The bent portion 52 that is formed by bending a sheet-like member substantially in the shape of an accordion is formed outside the pressing member 51. The bent portion 52 is suitably expanded or contracted by tilting and/or sliding of the pressing member 51, and makes the tilting and/or sliding of the pressing member 51 smooth. The bent portion 52 is formed integrally with the pressing member 51 by thermal fusion, adhesion, etc.

Although the pressing member 51 has a disc shape, the shape can be changed suitably. Further, although the bent portion 52 is formed in an annular shape in the present embodiment, it is formed along the outer periphery of the pressing member 51. Thus, the bent portion is suitably determined depending on the shape of the pressing member 51.

The frame portion 57 is provided outside the bent portion 52. The bent portion 52 and the frame portion 57 are formed integrally.

The bent portion 52 is made of deformable materials, such as an elastic material. The bent portion 52 and the frame portion 57 are formed integrally, using a rubber material such as silicone rubber, a thermoplastic elastomer, or selectable synthetic resin, etc. In addition, in the present embodiment, a portion or most of the frame portion 57 is formed integrally with a so-called reinforcing plate 56 which is formed of selectable synthetic resin including rigid resin, such as polycarbonate resin, polyurethane resin, or silicone resin, or which is formed of metal, etc., by thermal fusion, adhesion, etc. Rigidity can be added to the first member 5 by the reinforcing plate 56.

In addition, in the present embodiment, an input unit is constituted by the keytop 2 and the pressing member 51. The input unit is constituted by, for example, a keytop, and one or more members (here, correspond to the pressing member 51) that slide and tilts along with the keytop with sliding and tilting of the keytop. The input unit may be constituted only by, for example, a keytop.

The second member 6 has a frame body 65, first movable portions 61a to 61d connected with the frame body 65 via concave portions 66a to 66d, respectively, and thin-walled portions 63a to 63d (generically referred to as a thin-walled portion 63) connected with the first movable portions 61a to 61d (generically referred to as a first movable portion 61), and further includes a bulging portion 64 in its center connected with the thin-walled portions 63a to 63d. Further, the first movable portions 61a to 61d have inclined portions 67a to 67d connected with the frame body 65 via the concave portions 66a to 66d, and horizontal portions 68a to 68d (referred to a horizontal portion 68) connected with the inclined portions 67a to 67d (generically referred to an inclined portion 67), respectively, and connected with the thin-walled portions 63a to 63d, respectively.

The second member 6 is formed of, for example, selectable synthetic resin including rigid resin, such as polycarbonate resin, polyurethane resin, or silicone resin, or is integrally formed of metal, etc.

The inclined portion 67 is connected with the frame body 65 via the concave portion 66 (plays a role like a hinge). The inclined portion 67 has a slope on its top surface. This slope becomes gradually high along a course where the input unit slides. Further, this slope is provided in the course where the input unit slides. That is, the first movable portion 61 has has a slope which becomes gradually high along a course where the input unit slides and is placed in the course where the input unit slides. The inclined portion 67 is pressed and moved downward by sliding and tilting of the pressing member 51, i.e., by sliding and tilting of the input unit. Further, the bottom surface of the inclined portion 67 is flat, and abuts on a given position of the third member 7. The inclined portion 67 is connected with the horizontal portion 68.

The horizontal portion 68 has a flat top surface. The pressing member 51 is disposed on the top surface of the horizontal portion 68. The top surface of the horizontal portion 68, and the portion of the bottom surface of the pressing member 51 corresponding to the horizontal portion abut on each other. The horizontal portion 68 become thinner gradually toward the inside from a predetermined position, and is connected with the thin-walled portion 63. The thin-walled portion 63 and the horizontal portion 68 are connected with each other at a predetermined angle. For example, the thin-walled portion 63 and the horizontal portion 62 are connected with each other substantially in the shape of the letter inverted "V."

The thickness of the thin-walled portion 63 becomes almost the same. The thin-walled portion 63 is formed so as to fall toward the center, and is connected with the bulging portion 64.

The deformation that the inclined portion 67 and the horizontal portion 68, i.e., the first movable portion 61, is moved downward becomes smooth by the concave portion 66 and the thin-walled portion 63.

The bulging portion 64 is provided in a central portion, for example, in a position corresponding to the keytop 2. The bulging portion has a substantially spherical shape so as to bulge upward. An apex of the bulging portion 64 abuts on a central bottom surface of the input unit, i.e., a bottom surface of the keytop 2. The bulging portion 64 is provided so as not to obstruct tilting of the keytop 2 and pressing member 51. The shape of the bulging portion 64 may be a shape that does not obstruct the tilting of the keytop 2 and pressing member 51, i.e., a suitable shape, such as a substantially spherical shape or pyramidal shape.

In addition, in Fig. 3, any member does not exist but through holes 69a to 69d (generically referred to as a through hole 69) are formed, between the first movable portions 61a to 61d and between the thin-walled portions 63a to 63d, respectively. Further, in the present embodiment, input directions that allowed to be input by the directional input device 1 are four directions including up, down, right, and left directions. Thus, four first movable portions 61 are respectively provided in four directions including up, down, right, and left directions. In a case where a plurality of first movable portions 61 are provided in this manner, through holes 69 are provided between the first movable portions 61, respectively, so that a first movable portion 61 can be prevented from interfering with other first movable portions 61 caused by its downward movement.

In addition, the number of first movable portions 61 can be changed suitably. Further, in a case where input directions that can allowed to input are all the directions or the like, a first movable portion 61 may be provided in an annular shape so as to surround the input unit suitably. In this case, the first movable portion 61 becomes one. Further, it is desirable that the first movable portion 61 is formed of a hard material in order to press a second movable portion 73.

The third portion 7 is made of deformable materials, such as an elastic material. The third member 7 is formed using a rubber material such as silicone rubber, a thermoplastic elastomer, or selectable synthetic resin, etc. In the present embodiment, the third member is integrally formed of elastic conductive materials, such as conductive rubber, in the shape of a sheet. In this case, a position (second movable portion) corresponding to a fixed electrode becomes a movable electrode. Further, in this case, a bottom surface portion of the third member 7 in the position corresponding to the fixed electrode is expressed as the movable electrode.

In addition, in the invention, in a case where the movable electrode is provided on the bottom surface of a predetermined member, for example, is provided on the bottom surface of the movable portion or the second movable portion, the movable electrode shall include a case where at least the bottom surface of the movable portion and the second movable portion is formed of an elastic conductive material.

In a case where the third member 7 does not have conductivity, the movable electrode is formed, for example, using a proper method of forming a metallic thin film, such as vapor deposition or sputtering. Further, the movable electrode may be formed, for example, by pasting a metallic thin film, which is formed in advance, using an adhesive, a gluing agent, etc. In addition, it is desirable that the movable electrode has pliability so that it can be deformed when contacting the fixed electrodes 82a to 82d.

The third member 7 includes a pusher 71, a first thin-walled portion 72, a second movable portion 73, a second thin-walled portion 74, and a frame portion 75. The frame portion 75 is provided with a concave portion 76. In addition, a portion or most of the frame portion 75 is formed integrally with a so-called reinforcing plate 77 which is formed of selectable synthetic resin including rigid resin, such as polycarbonate resin, polyurethane resin, or silicone resin, or which is formed of metal, etc., by thermal fusion, adhesion, etc. Rigidity can be added to the third member 7 by the reinforcing plate 77.

The pusher 71 forms in a position corresponding to the keytop 2, the bulging portion 64, and a metal dome 81. The pusher 71 may have an arbitrary shape when the metal dome 81 is pressed to obtain a click feeling. Further, the shape of the top surface of the pusher 71 becomes a shape conformed to the shape of the bottom surface of the bulging portion 64. Also, the top surface of the pusher 71 abuts on the bottom surface of the bulging portion 64. Thereby, the pressing force by downward movement of the keytop 2 can be smoothly transmitted to the pusher 71, and the pusher 71 can smoothly move downward.

The first thin-walled portion 72 is provided so that downward movement of the pusher 71 or downward movement of the second movable portion 73 may become smooth. Further, the first thin-walled portion 72 is formed so as to be bent in a cross-sectional direction so that downward movement of the pusher 71 or downward movement of the second movable portion 73 may become smooth, and the pusher 71 and the second movable portion 73 may be naturally connected with each other.

A one second movable portion 73 is provided in an annular shape around the pusher 71 in correspondence with the fixed electrode 82 (that is, so as to surround the input unit). The second movable portion 73 is located below the first movable portion 61 (here, the bottom surface of the first movable portion 61 abuts on the top surface of the second movable portion 73), and is pressed by downward movement of the first movable portion 61, and a portion (at least a portion of the second movable portion 73) corresponding to the first movable portion 61 moves downward. A plurality of the second movable portions 73 may be provided so as to surround the input unit. Further, the second movable portion 73 may not be circular, and may be other closed shapes.

In addition, in the present embodiment, a movable portion is constituted by each of the first movable portions 61a to 61d, and a region of the second movable portion 73 corresponding to the bottom of each of the first movable portions 61a to 61d. In the present embodiment, although four movable portions are provided, the number of movable portions can be suitably determined in correspondence to the number of input directions that allowed to be input to the input unit. In addition, one or more (here, four) movable portions 61 are constituted by one or more (here, four) first movable portions and one or more (here, one) second movable portions as a whole.

since the movable portion has a first movable portion and a second movable portion, specifically the second movable portion 73 in an annular shape (or other closed shapes)is provided so as to surround the input unit,if the second movable portion is designed in advance, the first movable portion and the input unit can be suitably changed depending on designs, such as the number of input directions that allowed to be inputted.

The bottom surface of the second movable portion 73 has a slope that approaches a fixed electrode toward the inside from the outside. A movable electrode (surface portion on the side of the bottom surface (rear surface) of the second movable portion 73) is formed in a substantially inverted truncated chevron shape in cross-section. That is, the movable electrode faces the fixed electrode 82 at a tilt thereto. Further, the bottom surface of the second movable portion 73 may have a slope that approaches the fixed electrode 82 toward the outside from the inside. In this case, a movable electrode (surface portion on the side of the bottom surface (rear surface) of the second movable portion 73) is formed in a substantially truncated chevron shape in cross-section. That is, the movable electrode faces the fixed electrode at a tilt thereto. The bottom surface of the second movable portion 73 may be formed so as to be parallel to the fixed electrode if a change in a capacitative element caused by a change between the fixed electrode and the movable electrode can be detected.

As the movable electrode faces the fixed electrode 82 at a tilt thereto as mentioned above, the movable electrode can be brought close to the fixed electrode 82 rather than the movable electrode and the fixed electrode 82 face each other in parallel. Also, the movable electrode can be brought close to the fixed electrode 82 while the moving distance of the movable electrode is secured, and sufficient variation with respect to the variation of electrostatic capacity can be obtained.

The second movable portion 73 is provided in an annular shape. For this reason, the movable electrode also has an annular shape. In this case, although the movable electrode becomes one, since regions corresponding to a plurality of fixed electrodes become movable electrodes that constitute capacitative elements, respectively, the one movable electrode can be treated as a plurality of movable electrodes. In the invention, even if the number of any one of the movable electrode and the fixed electrode is one, if the other electrodes are plural, the one movable electrode or fixed electrode is expressed as the same number as the number of the other, i.e., as a plural number. In the present embodiment, since the fixed electrodes are four, the movable electrodes also become four. In addition, the movable electrode is not limited to one, but a plurality of, such as four or eight, movable electrodes, may be provided suitably. The shape of the second movable portion 73 or movable electrode cannot be limited to an annular shape, but can be changed suitably.

The second thin-walled portion 74 is provided in an annular shape around the second movable portion 73. Further, the frame portion 75 is provided outside the second thin-walled portion. Further, the concave portion 76 is provided in an annular shape in the frame portion 75. The concave portion 76 plays a role like a hinge, and makes downward movement of the second movable portion 73 along with the second thin-walled portion 74 smooth.

Although the substrate 8 is constituted by selectable substrate, the substrate in the present embodiment is constituted by a substrate of a portable telephone. The substrate 8 is constructed by providing the metal dome 81 and the fixed electrode 82 in the base 80.

The fixed electrode 82 is split in four directions including up, down, right, and left directions (fixed electrodes 82a to 82d). That is, four fixed electrodes 82 are provided. Further, the fixed electrode 82 is covered with an insulating film so as to be non-conductive even if the movable electrode contacts it. This insulating film may be provided in the second movable portion 73 so as to cover the movable electrode side. If a plurality of movable electrodes are provided, one fixed electrode 82 may be provided similarly to the movable electrode of the present embodiment. Further, the number of fixed electrodes 82 (for example, the number of split fixed electrodes) can be suitably changed to eight or the like other than four.

A plurality of capacitative elements for detecting input directions are constituted by the above fixed electrode and movable electrode.

The metal dome 81 is a click feeling generating portion that is elastically deformed to generate a click feeling when being pressed by the pusher 71. The metal dome 81 makes contact points provided on the substrate 8 and under the metal dome 81 short-circuited by the elastic deformation. The metal dome 81 is constituted by a metallic dish 86, and a thin film sheet 85 pasted on the base 80 in order to fix this dish over contact points. Further, the metal dome 81 can be changed into other click feeling generating portions that can generate a click feeling.

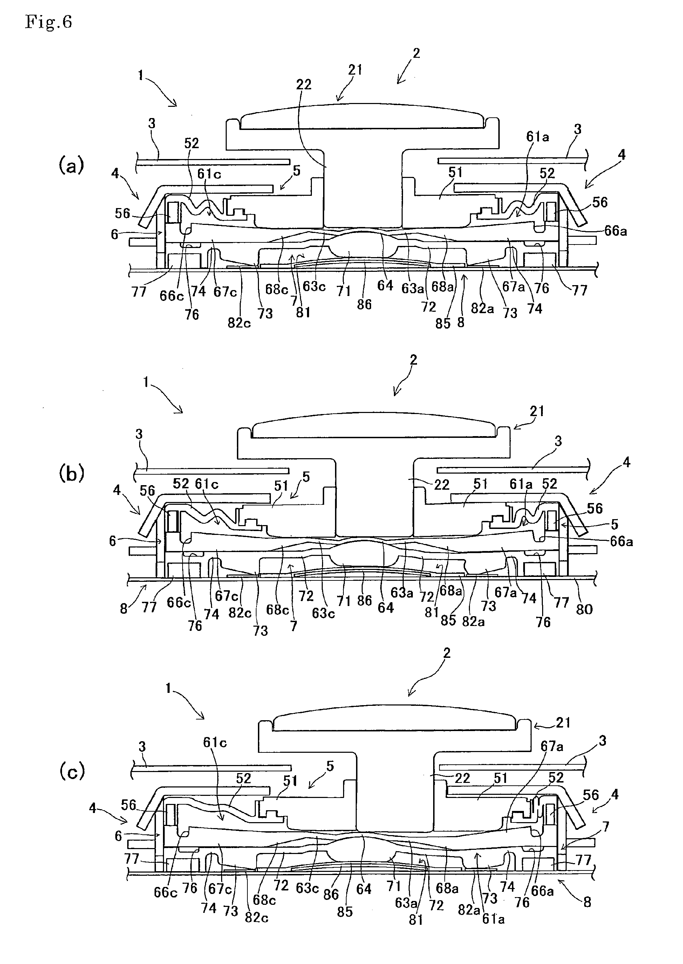

Figs. 6(a) to 6(c) are operational explanatory views illustrating a first operation of the directional input device 1: Fig. 6(a) shows an initial state, and if a right direction is inputted from the state of Fig. 6(a), the state will change from Fig. 6(a) to Fig. 6(b) and from Fig. 6(b) to Fig. 6(c). In addition, hatching that shows a cross-section is omitted in Figs. 6(a) to 6(c).

If the keytop 2 of the input unit is operated in a right direction (i.e., if a right direction is inputted to the input unit), the keytop 2 and the pressing member 51 (input unit) slid in the right direction so as to slide on the surface of the first member 5 (refer to Figs. 6(b) to 6(c)). During sliding, a portion of the bent portion 52 corresponding to the sliding direction is folded and contracted as shown in the drawings, and a portion opposite to this portion are opened and are expanded (refer to Fig. 6(b) to Fig. 6(c)). In this way, the input unit can be smoothly slid by the expansion and contraction of the bent portion 52.

Like Fig. 6(b), the bottom surface of a right end of the pressing member 51 slides in the right direction horizontally (including "substantially horizontal" in the invention) so as to climb the inclined portion 67a (the first movable portion 61a). For this reason, the pressing member 51 abuts on the rear surface of the top surface of the cover member 4. After the abutment on the rear surface of the top surface of the cover member 4, the cover member 4 serves as a guide, and thereby, the pressing member 51 further slides horizontally in the right direction. The slope of the inclined portion 67a is pressed by the pressing member 51 (input unit) by this sliding.

In addition, the pressing member 51 does not abut on the rear surface of the top surface of the cover member, but the pressing member 51 slides horizontally as it is, depending on the specification of operation of the keytop 2. Although Fig. 6(c) shows a state where the keytop 2 further slides from Fig. 6(b), since how to apply a force by an operation has been changed, the pressing member 51 slides so that the right thereof may fall.

As the input unit is disposed on the second member 6 and is supported by a supporting member such as the bent portion 52 ,etc, which slidably supports the input unit, the input unit can slide. Further, for example, as the input unit abuts on the rear surface of the top surface of a case of the directional input device 1, such as the cover member 4, this rear surface serves as a guide. The input unit can slide horizontally by this guide.

The top surface of the pressing member 51, i.e., the input unit may be made to abut on the rear surface of the top surface of the cover member 4 from the beginning. Thereby, horizontal sliding of the input unit becomes smooth.

If the course of the input unit that slides horizontally has a slope that becomes gradually high, the slope is pressed by the input unit that slide horizontally.

If the slope of the first movable portion 61a is pressed by the pressing member 51, the first movable portion 61a will move downward. That is, the concave portion 66a is deformed so as to open, and the first movable portion 61a moves downward so as to rotate with this concave portion as a fulcrum. Downward movement of the inclined portion can be made smooth by the concave portion 66a. Further, a joint between the horizontal portion 68a and the thin-walled portion 63a and a joint between the thin-walled portion 63a and the bulging portion 64 are deformed. Downward movement of the first movable portion 61 can be made smooth by this deformation.

If the first movable portion 61a moves downward, the second movable portion 73 (portion corresponding to the first movable portion 61a) located below the first movable portion 61a will be pressed, and moved downward. In this case, as the concave portion 76 is deformed so as to open, movement of the second movable portion 73 (portion corresponding to the first movable portion 61a) is made smooth.

If the second movable portion 73 moves downward, a movable electrode provided on the bottom surface (rear surface) of the second movable portion 73 will approach the fixed electrode 82a. Then, the movable electrode contacts the fixed electrode 82a. Thereby, since the distance between the movable electrode that is moved, and the fixed electrode can be changed, the electrostatic capacity of a capacitative element including the movable electrode and fixed electrode can be changed. In addition, since the insulating film is provided on the surface of the fixed electrode 82a, even if the fixed electrode 82a and the movable electrode contact, the capacitative element including the fixed electrode 82a and the movable electrode functions normally.

A plurality of movable electrodes may be provided on the bottom surface of the second movable portion 73 and in a region where the second movable portion moves downward, and the second movable portion 73 may move a plurality of movable electrodes corresponding to input directions.

After the input to the input unit is completed, the directional input device 1 will return to its initial state by the restoring force of each member.

Like Fig. 6, a movable portion (here, the first movable portion 61 and a region corresponding to the first movable portion 61 in the second movable portion 73) moves downward with the sliding of the input unit and makes move downward the movable electrode corresponding to the input direction inputted to the input unit together with the downward movement of the movable portion. Therefore the movable portion brings the movable electrode close to the fixed electrode that faces the movable electrode. This can change the distance between electrodes that constitute a capacitative element in correspondence with a sliding direction (that is, input direction) to which the input unit is made to slide, thereby changing the electrostatic capacity of the capacitative element.

That is, one or more (here, four) movable portions, that has a slope which becomes gradually high along a course where the input unit slides and is placed in the course where the input unit slides, is provided so as to move downward while the slope is pressed by the input unit that slides horizontally, respectively. More specifically, one or more (here, four) movable portions have one or more (here, four) first movable portions 61, that have a slope which becomes gradually high along a course where the input unit slides and is provided in the course where the input unit slides, which move downward while the slope is pressed by the input unit that slides horizontally; and one or more (here, one) second movable portions 73, that are provided below the first movable portions so as to surround the input unit, at least some of which move downward while pressed by the first movable portions. Then, a movable electrode is provided on the bottom surface of the second movable portion (that is, movable portion). If the input unit slides horizontally, the input unit will moves on and along the slope. However, since the input unit moves horizontally, the input unit will press this slope. Also, since the movable portion will move downward if the slope is pressed by the input unit, the movable electrode provided on the bottom surface of the movable portion can be brought close to the fixed electrode.

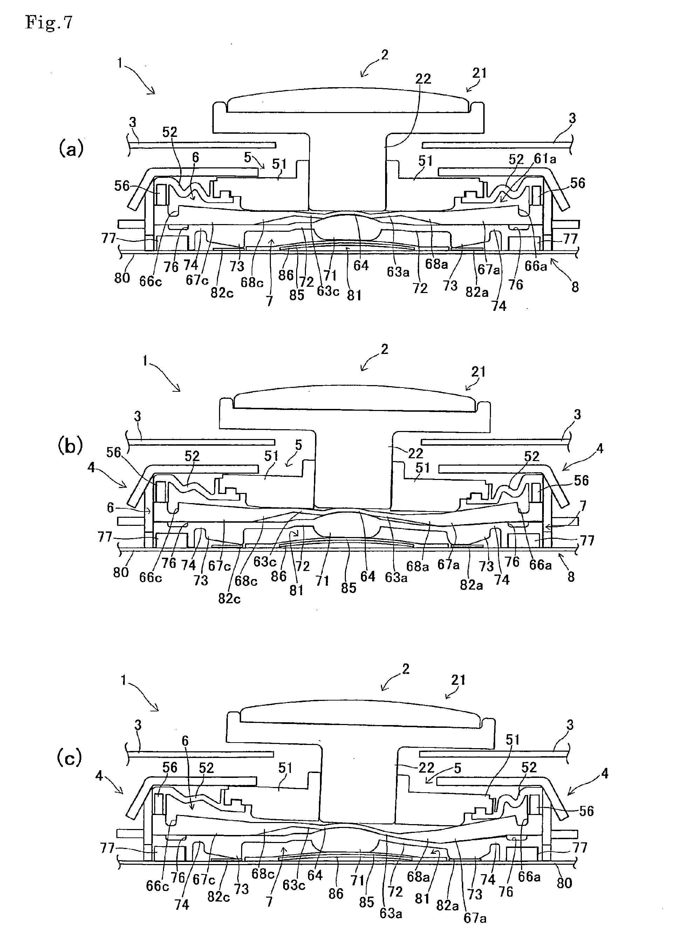

Figs. 7(a) to 7(c) are operational explanatory views illustrating a second operation of the directional input device 1. Fig. 7(a) shows an initial state, and if a right direction is inputted from the state of Fig. 7(a), the state will change from Fig. 7(a) to Fig. 7(b) and from Fig. 7(b) to Fig. 7(c). In addition, hatching that shows a cross-section is omitted in Figs. 7(a) to 7(c).

In this operation, the keytop 2 is operated so as to be tilted in the right direction. In this case, the keytop 2 is tilted while being slid.

If the keytop 2 is operated in the right direction, i.e., if a right direction is inputted to the input unit, the keytop 2 and the pressing member 51 (input unit) slide in the right direction so as to slide on the surface of the first member 5 (first movable portion), and are tilted in the right direction (refer to Fig. 7(b) to 7(c)). During sliding and tilting, a portion of the bent portion 52 corresponding to the sliding direction is opened in a longitudinal direction while being folded in a transverse direction, as shown in the drawing. Also, a portion opposite to this portion is opened and expanded (refer to Fig. 7(b) to Fig. 7(c)). In this way, the input unit can be smoothy tilted while being smoothly slid by the expansion and contraction of the bent portion 52.

The tilting fulcrum of the input unit (the keytop 2 and the pressing member 51) becomes the middle of the bottom surface of the input unit (position where the input unit (keytop 2) and the bulging portion abut on each other) during start of the operation of the input unit. If the keytop 2 is tilted, a left end of the top surface of the pressing member 51 abuts on the rear surface of the top surface of the cover member 3 like Fig. 6(b) immediately after the tilting of the keytop 2, the abutting portion becomes a tilting fulcrum, and the pressing member 51 is tilted. Thereby, when the input unit is tilted, an end of the bottom surface of the pressing member 51 that presses a slope in correspondence with the titling direction can move downward more largely. By making the top surface of the cover member 4 high, a portion where the bottom surface (rear surface) of the input unit and the apex of the bulging portion 64 abut on each other may be used as the tilting fulcrum.

In a case where the top surface of the pressing member 51, i.e., the input unit is made to abut on the rear surface of the top surface of the cover member 4 from the beginning, an abutting portion between the left end of the top surface of the pressing member 51 and the rear surface of the top surface of the cover member 3 becomes the tilting fulcrum of the input unit from the beginning of input.

The input unit is disposed on the second member 6 and is supported by a supporting member such as the bent portion 52, that slidably supports, the tilting fulcrum of the input unit is provided in the directional input device 1, a movable portion is pressed (particularly, a slope of the movable portion is pressed) and moved downward, so that the input unit can be tilted while being slid in response to an input direction. Thereby, the input unit can be tilted while sliding, and this directional input device can give an operator a new operation feeling.

Further, as the central bottom surface (bottom surface of the keytop 2) of the input unit abuts on the apex of the bulging portion 64, tilting of the input unit becomes smooth. Moreover, since the apex of the bulging portion 64 abuts on the bottom surface of the keytop 2, downward movement of the pusher 71 can be lessened or eliminated by movement of the keytop 2 by tilting of the input unit, it is possible to prevent an excessive force from being applied to a click feeling generating portion (metal dome 81). Thereby, generation of a click feeling can be prevented during tilting of the input unit.

As the input unit is tilted while being slid, the input unit presses the first movable portion 61a. Particularly, since the slope of the first movable portion 61a is provided in the vicinity the input unit, the input unit presses the slope by the sliding of the input unit. If this slope is pressed, pressing by tilting of the input unit can be increased more. Further, since the slope can be pressed more as the input unit is tilted while being slid, downward movement of the first movable portion can be increased more. Thereby, since the downward moving distance of a movable electrode can be increased, a change in electrostatic capacity can be increased.

In addition, in a case where the input unit is tilted while being slid, a slope is not required particularly. However, as a movable portion has a slope, the moving distance of the movable portion can be increased.

If the slope of the first movable portion 61a is pressed by the pressing member 51, the first movable portion 61a will move downward. That is, the concave portion 66a is deformed so as to open, and the first movable portion 61a moves downward so as to rotate with this concave portion as a fulcrum. Downward movement of the inclined portion can be made smooth by the concave portion 66a. Further, a joint between the horizontal portion 68a and the thin-walled portion 63a and a joint between the thin-walled portion 63a and the bulging portion 64 are deformed. Downward movement of the first movable portion 61 can be made smooth by this deformation.

If the first movable portion 61a moves downward, the second movable portion 73 located below the first movable portion 61a will be pressed, and moved downward. In this case, as the concave portion 76 is deformed so as to open, movement of the second movable portion 73 is made smooth.

If the second movable portion 73 (the portion thereof corresponding to the first movable portion 61a) moves downward, a movable electrode provided on the rear surface of the second movable portion 73 (the portion thereof corresponding to the first movable portion 61a) will approach the fixed electrode 82a. Then, the movable electrode contacts the fixed electrode 82a. Thereby, since the distance between the movable electrode that is moved, and the fixed electrode can be changed, the electrostatic capacity of a capacitative element including the movable electrode and fixed electrode can be changed. In addition, since the insulating film is provided on the surface of the fixed electrode 82a, even if the fixed electrode 82a and the movable electrode contact each other, the capacitative element including the fixed electrode 82a and the movable electrode functions normally.

A plurality of movable electrodes may be provided on the bottom surface of the second movable portion 73 and a region where the second movable portion 73 moves downward, and the second movable portion 73 may move a plurality of movable electrodes corresponding to input directions.

After the input to the input unit is completed, the directional input device 1 will return to its initial state by the restoring force of each member.

Like Fig. 7, a movable portion (here, the first movable portion 61 and a region corresponding to the first movable portion 61 in the second movable portion 73) moves downward with tilting of the input unit during its sliding, and makes move downward the movable electrode corresponding to the input direction inputted to the input unit together with the downward movement of the movable portion. Therefore the movable portion brings the movable electrode close to the fixed electrode that faces the movable electrode. This can change the distance between electrodes that constitute a capacitative element in correspondence with a sliding direction (that is, input direction) to which the input unit is tilted while being slid, thereby changing the electrostatic capacity of the capacitative element.

That is, one or more (here, four) movable portions, that has a slope which becomes gradually high along a course where the input unit slides and is placed in the course where the input unit slides, is provided so as to move downward while the slope is pressed by the input unit that is tilted while being slid. More specifically, one or more (here, four) movable portions have one or more (here, four) first movable portions 61, that have a slope which becomes gradually high along a course where the input unit slides and is provided in the course where the input unit slides, which move downward while the slope is pressed by the input unit that is tilted while being slid; and one or more (here, one) second movable portions 73, that are provided below the first movable portions so as to surround the input unit, at least some of which move downward while pressed by the first movable portions. Also, a movable electrode is provided on the bottom surface of the second movable portion (that is, movable portion). When the input unit is tilted while being slid, the input unit presses the slope. Also, since the movable portion will move downward if the slope is pressed by the input unit, a movable electrode provided on the bottom surface of the movable portion can be brought close to a fixed electrode.

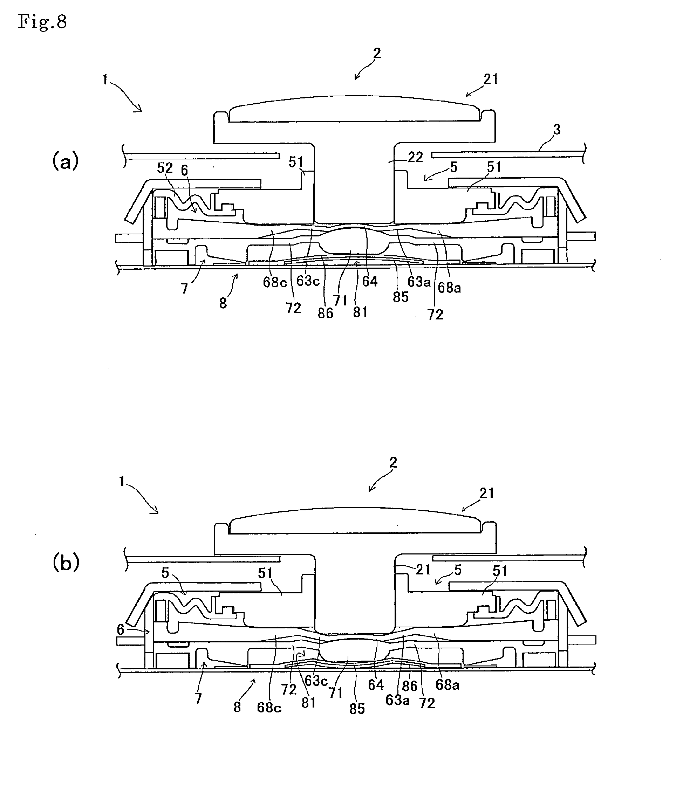

Figs. 8(a) and 8(b) are operational explanatory views illustrating a third operation of the directional input device 1. Fig. 8(a) shows an initial state, and if a keytop is pressed in a longitudinal direction from the state of Fig. 8(a), the state will change from Fig. 8(a) to Fig. 8(b). In addition, hatching that shows a cross-section is omitted in Figs. 8(a) and 8(b).

Since the keytop 2 can be moved in the longitudinal direction independently from the pressing member 51, if the keytop 2 is pressed, the keytop 2 will move downward.

By the downward movement of a keytop 2, the bulging portion 64 moves downward. At this time, the thin-walled portion 63 moves to make the downward movement of the bulging portion 64 smooth.

By the downward movement of the bulging portion 64, the pusher 71 moves downward. The metal dome 81 is pressed and elastically deformed by the pusher 71 to generate a click feeling. If the metal dome 81 is elastically deformed, contact points on the base 80 and immediately below the metal dome 81 are short-circuited by the metal dome 81. This is used, for example, for determination of a menu, etc.

After the input to the input unit is completed, the directional input device 1 will return to its initial state by the restoring force of each member.

### (Second Embodiment)

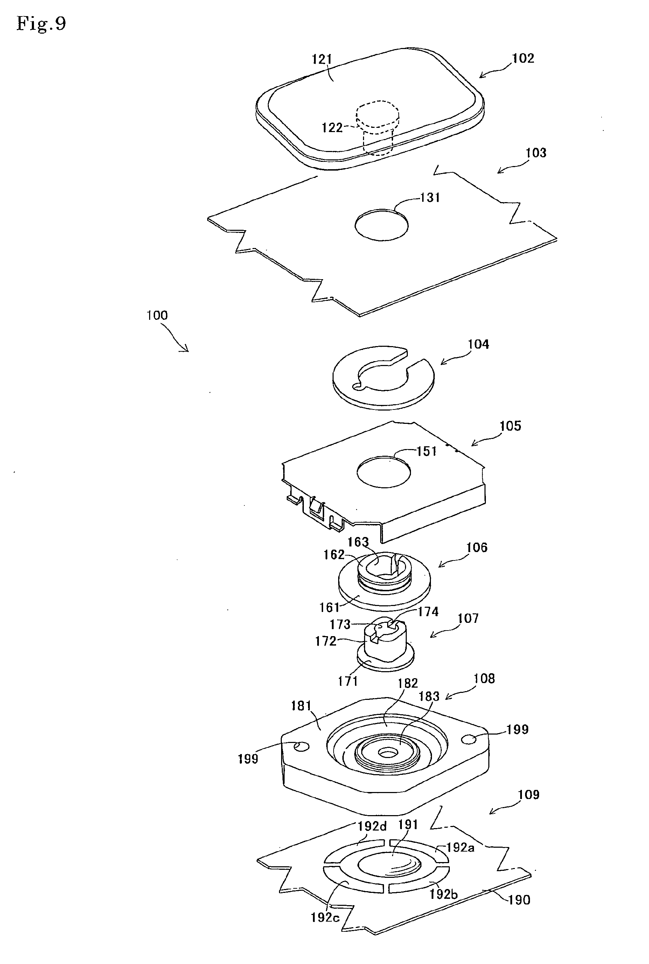

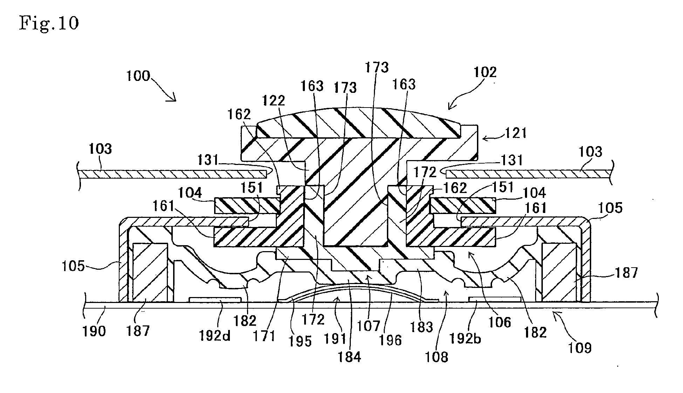

Fig. 9 is a schematic exploded perspective view of an example of a directional input device 100 according to a second embodiment. Fig. 10 is a sectional view of an example of the directional input device 100 according to the second embodiment.

The device 100 has a keytop 102, a plate 103, a first attaching member 104, a cover member 105, a second attaching member 106, a keytop attaching member 107, a deformable member 108, and a substrate 109.

The deformable member 108 is disposed on the substrate 109. The keytop attaching member 107 is attached to the deformable member 108. Further, the second attaching member 106 is attached to the keytop attaching member 107. The cover member 105 is disposed over the second attaching member 106. The first attaching member 104 is attached to the second attaching member 106 with the cover member 105 therebetween. Moreover, the keytop 2 is attached to the keytop attaching member 107 with the plate 103, the first attaching member 104, the cover member 105, and the second attaching member 106 put therebetween.

In a case where the plate 103 constitutes a portion of a housing of a portable telephone and is assembled into the portable telephone, as shown in Fig. 10, a gap for securing a stroke required for downward movement of the keytop 102 is provided between the plate 103 and the keytop 102.

The deformable member 108 is disposed in the substrate by proper methods, such as putting the cover member 105 from above the second attaching member 106, the keytop attaching member 107, and the deformable member 108 to fix the deformable member 108 to the substrate 109, or passing pins through pinholes 199 provided in the deformable member 108 to fix the deformable 108 to the substrate 109.

The keytop 102 is operated by an operator to allow a desired direction to be input to a portable telephone. The keytop 102 is constituted by an operating portion 121 and a supporting portion 122 that supports the operating portion 121, and transmits operation of the operating portion to an internal mechanism of the directional input device 100. Although the shape of the keytop 102 can be adopted suitably, it is formed in the shape of, for example, a substantially T-shaped cross-section as shown in Fig. 10.

The keytop 102 is formed of selectable synthetic resin including rigid resin, such as polycarbonate resin, polyurethane resin, or silicone resin. Further, the keytop 102 may be formed of other suitable materials, such as various kinds of glass or metal.

The plate 103 constitutes a portion of a housing of a portable telephone. The plate 103 is formed of selectable synthetic resin including rigid resin, such as polycarbonate resin, polyurethane resin, or silicone resin. The shape of the plate 103, etc. can be determined suitably. Further, the plate 103 may be formed of other suitable materials, such as a plate made of metal, such as SUS. Further, the plate 103 has a through hole 131 that is sized so as not to obstruct the operation of the keytop 102.

The cover member 105 houses the second attaching member 106, the keytop attaching member 107, and the deformable member 108. A circular through hole 151 that allows the supporting portion 122 of the keytop 102 to pass therethrough, and determines the limit of movement of the keytop 102 in an input direction is provided in the top surface of the cover member 105. In this directional input device 100, input directions that can be input become all the directions.

The cover member 105 is formed of selectable synthetic resin including rigid resin, such as polycarbonate resin, polyurethane resin, or silicone resin. Further, the cover member 105 may be formed of other suitable materials, such as a plate made of metal, such as SUS. The shape of the cover member 105, etc. can be determined suitably.

In addition, the through hole 151 may have a shape that limits movement of the keytop 2 in an input direction to four directions including up, down, right, and left directions, or eight directions including up, down, right, and left directions, and intermediate directions therebetween (for example, upper right direction, etc.). Similarly, the through hole 151 may have a shape that limits movement of the keytop 102 in an input direction depending on how many input directions that can be input, such as 16 directions and 32 directions, are required.

Input directions that can be input to the directional input device 100 can be suitably determined depending on the use of the device, and the shape of the through hole 151 is determined in correspondence to the input directions. Further, the through hole 151 has a shape that limits the moving distance of the keytop 102 if necessary.

In addition, the through hole 131 of the plate 103 may be the same as the through hole 151 of the cover member 105. In this case, the through hole 151 of the cover member 105 may be the same as the through hole 131. Moreover, at least any one of the plate 103 and the cover member 105 can be changed to other members if the operation of the directional input device 100, etc. can be realized. Moreover, at least any one of the plate 103 and the cover member 105 may not be provided if the operation of the directional input device 100, etc. can be realized.

The first attaching member 104 and the second attaching member 106 are attached to the cover member 105 with the cover member 105 therebetween. When the first attaching member 104 and the second attaching member 106 are assembled together, a guide composed of two parallel or substantially parallel plates that extend horizontally is formed. Here, as half side of the first attaching member and second attaching member has a substantially U-shaped cross-section, and the cover member 105 enter the substantially U-shaped portion, they are attached to the cover member. As such, by providing the first attaching member 104 and the second attaching member 106 so that the cover member 105 may enter the substantially U-shaped portion (guide), the input unit that includes the keytop 102 is provided so as to be slidable horizontally.

In addition, a gap exists between an inner surface of an upper portion or lower portion of the substantially U-shaped portion constituted by the first attaching member 104 and the second attaching member 106, and the cover member 105. This is because the first attaching member 104 and the second attaching member 106 are supported by the bottom surface of the deformable member 108 abutting on the metal dome 191. The gap may not be provided, and the inner surface of the upper portion or lower portion of the substantially U-shaped portion, and the cover member 105 may contact on each other.

Although the shape of the first attaching member 104 is a C-ring shape, it can be suitably changed to other shapes if the keytop 102 can be slid.

The shape of the second attaching member 105 is formed by providing a disc 161 with a convex portion 162. The shape of the second attaching member 105 can be suitably changed to other shapes if the keytop 102 can be slid. A portion of the convex portion 162 of the second attaching member 105 is provided with a through hole 163. The keytop attaching member 107 is fitted into the through hole 163 so as to be movable in the longitudinal direction. The convex portion 162 passes through the through hole 151, and has the first attaching member 104 attached thereto with the cover member 105 therebetween.

The first attaching member 104 and the second attaching member 105 are formed of selectable synthetic resin including rigid resin, such as polycarbonate resin, polyurethane resin, or silicone resin. Further, the first attaching member 104 may be formed of other suitable materials, such as a plate made of metal, such as SUS.

the keytop attaching member 107 is formed by providing a disc 171 with a convex portion 172. The convex portion 172 is fitted into the through hole 163 so as to be movable in the longitudinal direction. A portion of the convex portion 172 of the keytop attaching member 107 is provided with a through hole 173. A portion of the supporting portion 122 of the keytop 102 is fitted into and fixed to the through hole 173. Thereby, the keytop 102 is attached to the keytop attaching member 107. In addition, the keytop attaching member 107 is provided with a concave portion 174. A projection (not shown) of the keytop 102 fits into the concave portion 174 so that the keytop 102 may not rotate. The keytop attaching member 107 is formed of selectable synthetic resin including rigid resin, such as polycarbonate resin, polyurethane resin, or silicone resin.

The deformable member 108 is constituted by a frame body 181, a movable portion 182, and a bottom portion 183. The movable portion 182 forms in the shape of a sheet. Further, the movable portion 182 is provided substantially horizontally so as to connect the frame body 181 and the bottom portion 183 (input unit) together, and is bent so as to project downward. In this way, by bending the movable portion so as to project downward, a movable electrode provided on the rear surface of the movable portion can be brought close to a fixed electrode.

Further, in the present embodiment, since input directions that allowed to be input are all the directions, the movable portion 182 is provided in an annular shape so as to surround the keytop 102, i.e., the input unit. In this case, the movable portion 182 becomes one. A plurality of movable portions 182 may be provided depending on the number of input directions that can be input. For example, in a case where input directions are four directions including up, down, right, and left directions, deformable portions may be separately provided in the four directions including up, down, right, and left directions, respectively, so as to connect the frame body 181 and the bottom portion 183 (input unit) together.

The deformable member 108 is made of deformable materials, such as an elastic material. The deformable member 108 is formed using a rubber material such as silicone rubber, a thermoplastic elastomer, or selectable synthetic resin, etc. In the present embodiment, the deformable member 108 is integrally formed of elastic conductive materials, such as conductive rubber. In this case, a position corresponding to a fixed electrode becomes a movable electrode. Further, in this case, a rear surface portion of the movable portion 182 in the position corresponding to the fixed electrode is expressed as the movable electrode. Further, in a case where the movable electrode is provided on the bottom surface of a predetermined member, for example, is provided on the bottom surface of the movable portion 182, the movable electrode shall include a case where at least the bottom surface of the movable portion 182 is formed of an elastic conductive material.

In a case where the deformable member 108 does not have conductivity, the movable electrode is formed on the bottom surface of the movable portion 182, using , for example, a proper method of forming a metallic thin film, such as vapor deposition or sputtering. Further, the movable electrode may be formed, for example, by pasting a metallic thin film, etc, which is formed in advance, to the bottom surface of the movable portion 182 using an adhesive, a gluing agent, etc. In addition, it is desirable that the movable electrode has pliability so that it can be deformed when contacting the fixed electrode 192.

In addition, in the present embodiment, a portion or most of the frame portion 181 is formed integrally with a so-called reinforcing plate 187 which is formed of selectable synthetic resin including rigid resin, such as polycarbonate resin, polyurethane resin, or silicone resin, or which is formed of metal, etc., by thermal fusion, adhesion, etc. Rigidity can be added to the deformable member 108 by the reinforcing plate 187.

In the present embodiment, since the movable portion 182 is provided in an annular shape from an elastic conductive material, the movable electrode is also provided in an annular shape. In a case where a plurality of the movable portions 182 are provided as mentioned above, the region of a movable portion corresponding to the fixed electrode 192 becomes a movable electrode. In this case, a plurality of movable electrodes are provided. Further, in a case where the movable portion itself does not have conductivity, an annular one movable electrode is provided in the movable portion, or a plurality of movable electrodes are provided in predetermined places of the movable portion corresponding to the fixed electrode 192.

In this case, in a case where a movable electrode is provided in an annular shape, the movable electrode becomes one. However, since regions corresponding to a plurality of the fixed electrodes 192 become movable electrodes that constitute capacitative elements, respectively, the one movable electrode can be treated as a plurality of movable electrodes. In the invention, even if the number of any one of the movable electrode and the fixed electrode is one, if the other electrodes are plural, the one movable electrode or fixed electrode 192 is expressed as the same number as the number of the other, i.e., as a plural number. In the present embodiment, since the fixed electrodes are four, the movable electrodes also become four. In addition, the movable electrode is not limited to one, but a plurality of, such as four or eight, movable electrodes, may be provided suitably.

The deformable member 108 and the keytop attaching member 107 are integrally formed by thermal fusion, adhesion, etc. Thereby, the keytop attaching member 107 is attached to the deformable member 108. A pusher 184 is provided in a position corresponding to the keytop 102 on the rear surface of the deformable member 108. The pusher 184 abuts on the metal dome 191. The pusher 184 may have an arbitrary shape if the metal dome 191 can be elastically deformed to generate a click feeling.

Although the substrate 109 is constituted by selectable substrate, the substrate in the present embodiment is constituted by a substrate of a portable telephone. The substrate 109 has a base 190, the metal dome 191, and the fixed electrode 192.

The fixed electrode 192 is split in four directions including up, down, right, and left directions (fixed electrodes 192a to 192d). That is, four fixed electrodes 192 are provided. Further, the fixed electrode 192 is covered with an insulating film so as to be non-conductive even if the movable electrode contacts it. This insulating film may be provided in the movable portion 181 so as to cover the movable electrode side. If a plurality of movable electrodes are provided, one fixed electrode 192 may be provided similarly to the movable electrode of the present embodiment. Further, the number of fixed electrodes 192 (for example, the number of fixed electrodes split) can be suitably changed to eight , etc, other than four.

The metal dome 191 is a click feeling generating portion that is elastically deformed to generate a click feeling when being pressed by the pusher 181. The metal dome 191 makes contact points provided on the substrate and under the metal dome 191 short-circuited by the elastic deformation. The metal dome 191 is constituted by a metallic dish 196, and a thin film sheet 195 pasted on the base 190 in order to fix this dish over contact points. Further, the metal dome 191 can be changed into other click feeling generating portions that can generate a click feeling.

In addition, in the present embodiment, the input unit is constituted by the keytop 102, the keytop attaching member 107, and the bottom portion 183. The input unit is constituted by, for example, a keytop, and one or more members (here, correspond to the keytop attaching member 107 and the bottom portion 183) that slide along with the keytop with sliding of the keytop. The input unit may be constituted only by, for example, a keytop.

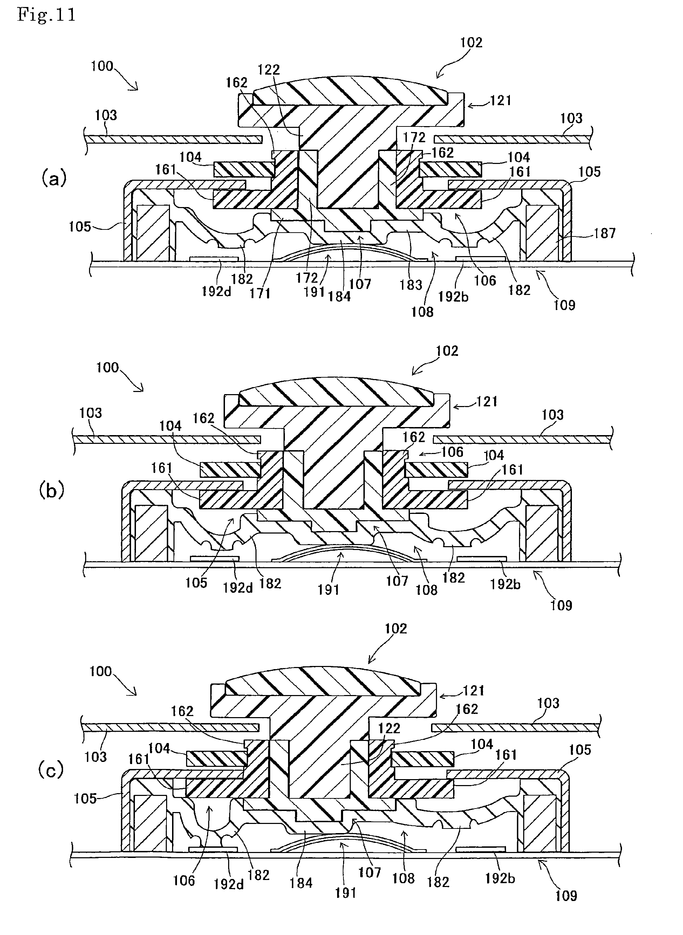

Figs. 11(a) to 11(c) are operational explanatory views illustrating a first operation of the directional input device 100. Fig. 11(a) shows an initial state, and if an up direction (left direction in the drawing) is inputted from the state of Fig. 11(a), the state will change from Fig. 11(a) to Fig. 11(b) and from Fig. 11(b) to Fig. 11(c). In addition, hatchings showing cross-sections of a fixed electrode 192b, a fixed electrode 192c, the dish 196, the thin film sheet 195, and the base 190 are omitted.

If the keytop 102 is operated in an up direction, i.e., if an up direction is inputted to the input unit, a substantially U-shaped portion that is formed by the first attaching member 104 and the second attaching member 105 becomes a guide, and consequently, the input unit including the keytop 102 slides in the left direction (refer to Fig. 11(b) to 11(c)). During sliding, a region (here, left region) corresponding to an input direction of the movable portion 181 is bent, and moves downward. Further, as the movable portion 181 is curved during sliding, at least a portion of the movable portion 181 move downward. Also, the region of the movable portion 181 opposite the input direction is pulled, and (at least a portion of the movable portion) moves upward. Thereby, a movable electrode corresponding to an input direction can be brought close to the fixed electrode 192d. Further, in the region of the movable portion opposite the input direction, a movable electrode can be kept away from the fixed electrode 192b. In this way, by providing the movable portion 181 symmetrically (in this case, in an annular shape) in correspondence with an input direction as seen from middle, a movable electrode corresponding to the input direction can be brought close to a fixed electrode 192d, a movable electrode opposite to the above movable electrode can be kept away from the fixed electrode 192b, a change in electrostatic capacity can be captured large, and direction detection becomes easy.

In addition, although a movable electrode contacts the fixed electrode 192 and approaches it most, since the insulating film is provided on the surface of the fixed electrode 192 even if a movable electrode contacts the fixed electrode, a capacitative element including the movable electrode and the fixed electrode 192 functions as a capacitative element.

In addition, since a direction in which the movable portion 183 is curved is necessarily a down direction by making the movable portion 183 project downward and bent, the movable portion 183 will surely move downward with sliding of the input unit.

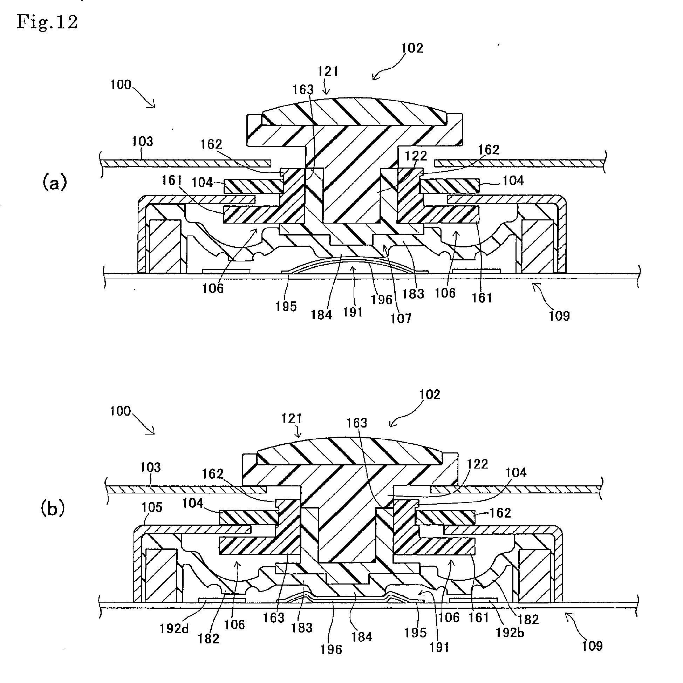

Figs. 12(a) and 12(b) are operational explanatory views illustrating a second operation of the directional input device 100. Fig. 12(a) shows an initial state, and if a keytop is pressed in a longitudinal direction from the state of Fig. 12(a), the state will change from Fig. 12(a) to Fig. 12(b).

Since the keytop 102 can be moved in the longitudinal direction, if the keytop 102 is pressed, the keytop 102 will move downward.

By the downward movement of the keytop 2, the pusher 184 moves downward. The metal dome 191 is elastically deformed by the pusher 184 to generate a click feeling. If the metal dome 191 is elastically deformed, contact points on the substrate and immediately below the metal dome 191 are short-circuited by the metal dome 191. This is used, for example, for determination of a menu, etc.

### (Modification)

The shape or the like of the members in the first embodiment and the second embodiment can be changed suitably.

For example, the second member 6 or the deformable member 108 may be formed as a key base that is a sheet-like member that constitutes a key sheet where function keys or the like are disposed.

Further, in a case where a movable electrode contacts a fixed electrode (via an insulating film), two linear electrodes that can be short-circuited as the movable electrode contacts them may be provided inside or outside the fixed electrode. In a case where the linear electrodes are short-circuited from the movable electrode, these can be used for excitation signals of direction detection start. The two linear electrodes are provided, for example, concentrically in a ring shape. Further, the linear electrodes may be provided on the side of the movable electrode. In this case, a portion of the fixed electrode that contacts the linear electrodes is not provided with an insulating film, in order to enable the linear electrodes to be short-circuited.

### (Others)

A method of detecting a direction using a directional input device 200 according to one embodiment of the invention will be described. The configuration of the multi-directional input devices 200 may be the same as that of the directional input device 1 and the directional input device 100.

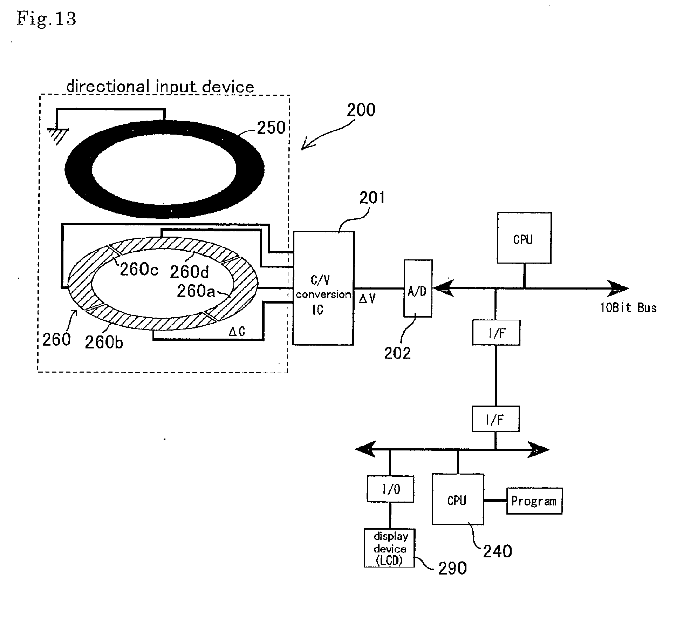

Fig. 13 shows a schematic configuration when the directional input device 200 is assembled into a portable telephone. In addition, hatchings in Fig. 13 given to fixed electrodes 260a, 260b, 260c, and 260d makes show the fixed electrodes 260a, 260b, and 260c 260d clear, but they do not express cross-sections. Further, although a case where four capacitative elements are used is described herein, the number of capacitative elements can be changed suitably. Even if the number of capacitative elements is changed, the principle of direction detection conforms to the following description.

The movable electrode 250 corresponds to the annular movable electrode provided on the bottom surface of the movable portion of the directional input device 1 or directional input device 100. The fixed electrodes 260a, 260b, 260c, and 260d correspond to the fixed electrodes 82a, 82b, 82c, and 82d or fixed electrodes 192a, 192b, 192c, and 192d of the directional input device 1 or directional input device 100.

The movable electrode 250 and each of the fixed electrodes 260a, 260b, 260c, and 260d constitutes each of four capacitative elements in four directions including up, down, right and left directions. The movable electrode 250 moves with the operation of the input unit in an arbitrary direction. The electrostatic capacity of at least one of the four capacitative elements changes by this movement.
In particular, since a portion (for example if input is made in a right direction, a movable electrode corresponding to the fixed electrode 260a) of the movable electrode 250 that corresponds to a fixed electrode and corresponds to an input direction approaches the fixed electrode, the electrostatic capacity of at least one capacitative element (capacitative element having the fixed electrode 260a) corresponding to the input direction changes (increases). Thereby, the input direction (right direction) of the input unit can be detected from a change in the electrostatic capacity accompanying the movement of the movable electrode 250. In addition, particularly in the case of the second embodiment or the first embodiment where input directions that can be input are eight directions or all the directions, etc., changes in the electrostatic capacity of four capacitative elements may be combined together.

A C/V conversion IC 201, an A/D 202, a CPU 240, etc. constitute a control unit. The members, such as the A/D 202 and CPU 240, that constitute the control unit, can be suitably changed to logical circuits, such as a signal processing circuit, or other suitable members.

Further, the control unit can perform the processing of further measuring the intensity of a force and/or the speed of the force used for the input of the input unit, from the changes in electrostatic capacity.

The C/V conversion IC 201 converts a variation in electrostatic capacity caused by a change in electrostatic capacity of at least one of the above four capacitative elements into the variation (ΔV) of a voltage value. The variation of a voltage value is converted into a digital signal by the A/D 202, and the CPU 203 recognizes the variation in the electrostatic capacity of at least one of the four capacitative elements from the converted digital signal. An input direction is detected from the recognized four variations in electrostatic capacity. In this way, by using a variation (for example, may be the balance of a change in the electrostatic capacity of each capacitative element) in electrostatic capacity for direction detection, detection of all the arbitrary directions of 360 degrees is theoretically possible. The CPU 203 also performs processing according to a detected arbitrary direction, such as moving a pointer on a screen of a display device 290 of a portable telephone so as to correspond to this arbitrary direction.

The processing method of direction detection by a change in electrostatic capacity can be changed suitably.

Moreover, the intensity of a force and/or the speed of the force used for the input of the input unit can be measured with a variation in electrostatic capacity. The intensity of the force can be known from the variation in electrostatic capacity. Further, the speed of the force may be obtained by dividing the variation by a time required for input operation. The control unit can perform processing according to the intensity of the force and/or the speed of the force.

## Claims

1. A directional input device for detecting an input direction depending on a change in the capacity of a capacitative element, the device comprising:
an input unit, that horizontally slide in correspondence with an input direction allowed to be inputted;
a capacitative element, that has a movable electrode and a fixed electrode and is used to detect an input direction inputted to the input unit;
and one or more movable portions, that move downward with the sliding of the input unit and make move downward the movable electrode corresponding to the input direction inputted to the input unit together with the downward movement of the movable portions and bring the movable electrode close to the fixed electrode that faces the movable electrode.

2. The directional input device according to Claim 1,
wherein the input unit is provided so as to be tiltable while sliding in correspondence with the input direction;
and the movable portion is provided so as to move downward as the input unit tilts while sliding and make move downward the movable electrode corresponding to the input direction inputted to the input unit together with the downward movement of the movable portion and bring the movable electrode close to the fixed electrode that faces the movable electrode.

3. The directional input device according to Claim 1,
wherein the movable portion, that has a slope which becomes gradually high along a course where the input unit slides and is placed in the course where the input unit slides, is provided so as to move downward while the slope is pressed by the input unit that slides horizontally;
and the movable electrode corresponding to the input direction inputted to the input unit is provided on a bottom surface of the movable portion.

4. The directional input device according to Claim 1,
wherein the one or more movable portions include:
one or more first movable portions, that have a slope which becomes gradually high along a course where the input unit slides and is provided in the course where the input unit slides, which move downward while the slope is pressed by the input unit that slides horizontally;
and one or more second movable portions, that are provided below the first movable portions so as to surround the input unit, at least some of which move downward while pressed by the first movable portions,
and the movable electrode corresponding to the input direction inputted to the input unit is provided on a bottom surface of the second movable portion.

5. The directional input device according to Claim 3 or 4,
wherein the input unit is provided so as to be tiltable while sliding in correspondence with an input direction,
and the movable portion is provided so as to be pressed by the input unit that is tilted while sliding and move downward.

6. The directional input device according to Claim 1,
wherein the movable portion is formed like a sheet, is bent so as to project downward, and is provided so as to move downward while being curved downward with the sliding of the input unit,
and the movable electrode corresponding to the input direction input to the input unit is provided on a bottom surface of the movable portion.

7. The directional input device according to Claim 2 or 5,
wherein the input unit includes at least a keytop and is formed so that the keytop may move downward when the keytop is pressed in a longitudinal direction,
and further comprising a pusher that moves downward with the downward movement of the keytop and presses a click feeling generating portion that generates a click feeling.

8. The directional input device according to Claim 2, 5, or 7, further comprising a bulging portion, an apex of that abuts on a central bottom surface of the input unit.

9. The directional input device according to Claim 1, 3, 4, or 6
wherein the input unit includes at least a keytop and is formed so that the keytop may move downward when the keytop is pressed in a longitudinal direction,
and further comprising a pusher that moves downward with the downward movement of the keytop and presses a click feeling generating portion that generates a click feeling.
